# Europäisches Patentamt
## European Patent Office
## Office européen des brevets

(11) Publication number: **0 096 511**
**B1**

(12) **EUROPEAN PATENT SPECIFICATION**

(45) Date of publication of patent specification: **23.08.89**

(51) Int. Cl.⁴: **G 02 B 6/38**

(21) Application number: **83303028.1**

(22) Date of filing: **25.05.83**

(60) Divisional application 86200448 filed on 20.03.86.

(54) **Optical fibre termination method, terminal, splice, and connector therefor.**

(30) Priority: **05.06.82 GB 8216433**

(43) Date of publication of application:
**21.12.83 Bulletin 83/51**

(45) Publication of the grant of the patent:
**23.08.89 Bulletin 89/34**

(84) Designated Contracting States:
**BE DE FR GB IT NL SE**

(56) References cited:
**EP-A-0 021 871
EP-A-0 025 013
DE-A-2 531 994
GB-A-2 003 294
GB-A-2 034 068
GB-A-2 052 790
GB-A-2 084 345
JP-A-54 074 453
US-A-4 033 668
US-A-4 185 883
US-A-4 205 897
US-A-4 396 247**

(73) Proprietor: **AMP INCORPORATED**
**P.O. Box 3608 449 Eisenhower Boulevard
Harrisburg Pennsylvania 17105 (US)**

(72) Inventor: **Ten Berge, Eduardus Franciscus
Antonius
Hobbemaplein 14
NL-5151 SL Drunen (NL)**

(74) Representative: **Warren, Keith Stanley et al
BARON & WARREN 18 South End Kensington
London W8 5BU (GB)**

(56) References cited:
**ELECTRONICS LETTERS, vol. 17, no. 18, 1981 T.
KUROKAWA et al. "Precision moulded fibre
connector using an electroformed cavity",
pages 667-669**

Courier Press, Leamington Spa, England.

## Description

This invention relates to an optical fibre termination technique and product which is useful in the provision of releasable fibre optic connections.

It is known to terminate optical fibres by ferrule members at which optically flat exposed fibre ends may be formed to facilitate concentric seating in a bore of an alignment member adapted to be engaged by aligned optical fibre terminations at opposite ends, and thereby install a disconnectable optical fibre connection. Reference is made, for example, to AMP Incorporated US patent Specification 3 999 837.

It has also been proposed by GTE Laboratories in Technology News EDN August 20, 1980, to provide a releasable two-part connector in each part of which a short length of optical fibre has one end centered in a bushing and the other end disposed in an elastomeric splice ferrule adapted to receive the end of an optical fibre in abutting relationship with the other end of the short fibre in a permanent connection. The arrangement is such that the bushings of the two parts are brought into engagement with the one ends of the short fibre lengths in aligned face-to-face abutting relationship at an interface between the bushings.

It has also been proposed to interconnect or splice optical fibres by aligning end portions in a bore of a deformable alignment member and to deform the member about the fibres to secure them in aligned juxtaposition.

US-A-4 185 883 discloses a method of making an optical fibre length for terminating an optical fibre by splicing in optical alignment therewith, which comprises forming a short length of optical fibre within a coating and thereafter forming the short fibre length with an optical surface. The coating is a glass sleeve collapsed onto the short fibre length with an end of the fibre length being mounted in a watch jewel sealed into the end of a ferrule.

US-A-4 033 668 discloses the joining (splicing) of first and second glass members, for example optical fibres, directly together, by coating surfaces at ends to be joined with thin metallic coatings, positioning the members in abutting relation and flowing solder around the joint to join the metal coatings and seal the interface. The technique disclosed for forming the metal coating is by dipping the fibre end into a 'Bright Platinum 0.5X paste'.

JP-A-54-74453 discloses the joining of metal coated fibres by abutting ends within a metal sleeve of similar material to the metal coating and sealing between the coatings and the sleeve by similar metal, preferably under vacuum.

GB-A-2 034 068 discloses the provision of metal coating on an end part of an elongate optical fibre over a length at which the end part is to enter into a feedthrough device. A first coating of metal is obtained by applying a liquid having a dissolved noble metal and baking to obtain a thin initial coating of noble metal, and then to apply a further coating by plating. The fibre end so coated is then inserted into a metal tube and solder is flowed between the tube and the coating to form a sealed termination of the fibre of increased mechanical strength.

EP-A1-21 871 and its equivalent US-A-4 396 247 disclose a method of terminating an optical fibre by splicing it to a short length of fibre having a metal coating over part of its length. All of the embodiments disclosed show a coated length extending only over part of a cylindrical support at the forward end thereof and embody a coating of frustoconical form for engagement in a complementary bore of a fitting for securement by bonding or welding. The coating is formed by an initial electroless coating followed by a further relatively thick electroplated coating of increasing thickness longitudinally over the coated part of the fibre length.

GB-A-2 003 294 discloses the use of plating on stripped end portions of plastics clad fibres to protect against core separation by deformation of the cladding under tensile stress with bonding or soldering of the plated ends into fittings.

It is an object of the present invention to present a technique for terminating an optical fibre, and an optical fibre termination whereby connection between terminated fibres can more easily and or more economically be made.

According to the present invention, a method of making an optical fibre terminal comprising an optical fibre length for terminating an optical fibre by splicing in optical alignment therewith, which comprises forming a short length of fibre within a coating and thereafter providing the short fibre length with an optical surface is characterised by forming a length of optical fibre with an initial thin electroless metallic coating of uniform thickness and a subsequent relatively thick electroplated coating of uniform thickness, cutting the short length from the metallic coated fibre to form a short needlelike length coated throughout the length and between the opposite ends thereof, and providing the opposite ends of the coated short length with optical surfaces.

This enables a fibre to be terminated by means which can more readily be connected in the field than can a plain fibre.

Suitably, after forming the optical surfaces, part of the coating is removed over an end portion of the coated length to define a reduced diameter end portion which is spliced to the fibre to be terminated.

This facilitates alignment of the spliced ends of the coated length and the fibre to be terminated by matching the diameter of the spliced portions more closely.

A paper published in Solid State Technology of February 1974 by C.Y. Kuo of the Electro-Metallics Department of Englehard Industries Division of Englehard Minerals & Chemicals Corporation, Newark, New Jersey, entitled Electrical Applications of Thin-Films produced by Metallo-Organic Deposition, discusses advantageous means whereby an initial thin coating may be obtained by electroless plating using the so-called MOD techniques.

After forming the metal coated fibre length with optical faces the coated fibre length, at least at one end, is suitably subject to a further plating operation to define an annular raised section around the optical face at that end to protect the optical face and defined by an extension of the coating beyond the optical surface, the other end being spliced to the fibre to be terminated.

It has been found that a fibre core of 100 micron diameter may be coated with metal to an outer diameter of 500 micron concentric with the core to within 1 micron.

In order to carry out the technique a substantial length of fibre may be formed with a uniform relatively rigid coating before being chopped into short lengths which are then formed with the optical surfaces. A multiplicity of chopped lengths are suitably mounted in spaced parallel relation in a holding fixture so that optical faces may be formed simultaneously on the multiplicity by conventional grinding and polishing techniques.

The invention includes an optical fibre terminal formed by the method of the invention and spliced at one end to and in optical alignment with an extended length of relatively flexible optical fibre, and at the other end projecting from the splice as a rigid optical needle.

Suitably an optical fibre terminal formed by the method of the invention is characterised in that the short fibre length is of diameter in the range of 50 to 125 micron and the coated fibre or the enlarged diameter one end portion thereof has an outer diameter of the order of 500 micron concentric with the core to within 1 micron.

The invention includes an optical fibre terminated by a short coated fibre length made by the method of the invention and characterised in that the relatively rigid coated fibre length and the fibre to be terminated are aligned in a deformable alignment body having an alignment passageway in which the coated length and the fibre to be terminated are disposed end to end, the alignment body being contained within a metal crimping sleeve which is radially crimped resiliently to deform the alignment body about the abutted ends of the coated length and the length to be terminated, the relatively rigid coated length projecting from the alignment body.

For forming the splice between the fibre to be terminated and the short fibre length there are available many known techniques and devices. If the splice is to be formed under factory or laboratory conditions, a fusion or welding technique is appropriate to give a low loss splice connection. However such splice joints require expensive tooling and skilled workmanship and are generally not suitable or economic for field application.

A suitable technique for field application is the crimp technique in which ends of the fibre to be terminated and of the short fibre length are aligned within an alignment bore of a deformable alignment body contained within a metal crimping sleeve. Crimping to effect radial compression of the sleeve secures the fibre ends in alignment.

The invention includes a fibre optic male connector comprising a terminated fibre according to the invention characterised in that the coated fibre projects from the associated support bushing and the crimping sleeve to form a male connector.

The invention also includes a fibre optic female connector comprising a terminated fibre according to the invention characterised in that the crimping sleeve at the end of the coated fibre extends beyond the support bushing and the coated optical fibre which extend coaxially into the sleeve extension, a resilient alignment member being mounted in the sleeve extension and having an alignment passageway embracing the end of the coated fibre within the sleeve extension the alignment member resiliently engaging the coated fibre and having an alignment passageway portion extending away therefrom for reception of a complementary coated fibre.

An alignment member may, for example, be folded from sheet metal to define an alignment passageway of lesser diameter than that of the fibre ends to be inserted but having resilient wall parts which may be sprung apart on insertion of the fibre ends.

The invention may be applied not only to the termination of individual fibres for connection to individual complementary fibres, but also to coupling members for coupling together two or more fibres for connection to another or more than one other fibre.

To this end coated short lengths of fibre may be bent to define a curved optical path, and parts of the coating removed at the external surfaces of the bends to define optical surfaces at which the fibre core is exposed, the optical surfaces of a pair being abutted and the coatings around the abutting surfaces being bonded for example, by fusion, or soldering.

The invention includes a method of joining two or more optical fibre terminals made by the method of the invention which includes forming at least two of the coated fibres with optical faces extending lengthwise along the fibre and, abutting the optical faces and bonding the metal coatings surrounding the faces to effect a joint.

The invention also includes an optical fibre terminal made by the method of the invention coupled to a lens characterised in that the lens is mounted in the bore of a tube within which the optical fibre terminal has a close sliding fit.

The invention will now be described by way of example, with reference to the accompanying partly diagrammatic drawings, in which:

Figure 1 is a fragmentary exploded view of a connector assembly for terminating a pair of optical fibres and releasably connecting the terminated ends;

Figure 2 is a perspective view to an enlarged scale of an intermediate short fibre length of the assembly of Figure 1;

Figure 3 is a perspective exploded view of a crimp splice;

Figure 4 is a perspective view of the assembled splice of Figure 3;

Figure 5 is a sectional side elevation of a fibre optic termination suitable for assembly in a connector housing for mating with a complementary connector;

Figure 6 is a fragmentary sectional elevation of part of a multi-way connector housing for the termination of Figure 5;

Figure 7 is an end view of a spring form alignment member for use in a connector of the kind shown in Figures 5 and 6, or assembly of Figure 1;

Figures 8 and 9 illustrate successive steps in the manufacture of a 4-way coupling member;

Figure 10 is a perspective view of a 4-way coupling member;

Figure 11 is a perspective view of a 3-way coupling member;

Figure 12 is a sectional perspective view of a male connector;

Figure 13 is a view similar to that of Figure 12 of the male connector assembled into a male connector housing;

Figure 14 is a sectional perspective view of a female connector;

Figure 15 is a view similar to that of Figure 14, but viewed from the opposite side, assembled into a female connector housing;

Figure 16 is a fragmentary sectional elevation of a coupling between an optical needle and a laser, and

Figure 17 is a similar view to a reduced scale illustrating the mounting of the coupling in the casing of a laser device.

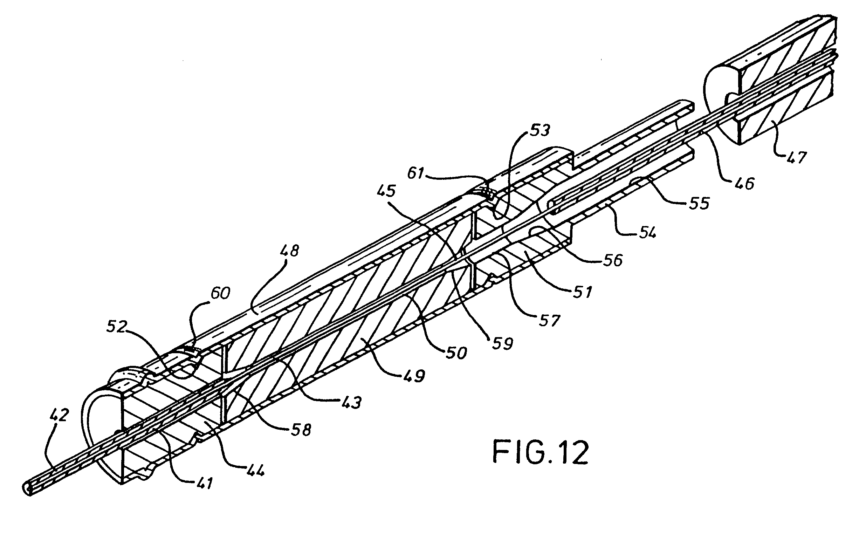

The connectors of Figures 12 to 15 are the subject of EP-A-0 201 944 divided from the present application and in which is claimed a connector for terminating an optical fibre comprising a tubular crimping sleeve 48 containing a resiliently deformable alignment body 49 having a central alignment passage 50 for optical fibres 43, 45, characterised in that the crimping sleeve 48 extends beyond the alignment body 49 at opposite ends and a support bushing 44, 51 having a central fibre passageway is disposed within each end of the sleeve 48 adjacent the alignment body 49, each support bushing 44, 51 having a peripheral recess 52, 53 within the sleeve 48 whereby on crimping the sleeve 48 about the alignment body 49 and the bushings 44, 51 the sleeve 48 may be indented 60, 61 into the recesses 52, 53 to secure the bushings 44, 51 in abutment with opposite ends of the alignment body 49 and the alignment body 49 under axial constraint.

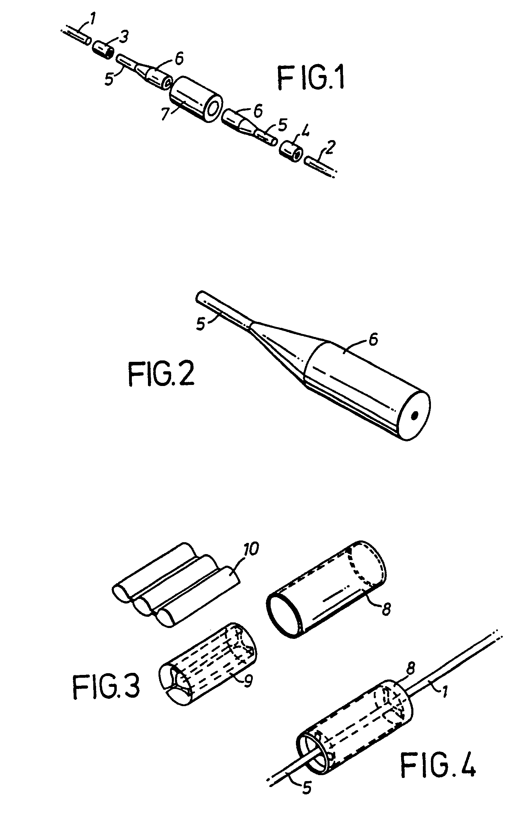

In the arrangement of Figure 1, optical fibres 1 and 2 are arranged for insertion into rear ends of splice ferrules 3, 4 which at their other ends are arranged to receive the rear, reduced diameter ends 5 of coated intermediate, short fibre lengths 6. The forward larger diameter ends of the coated fibre lengths 6 are axially insertable with a close fit into opposite ends of an alignment member having a through passageway within which the ends of the lengths 6 may abut.

The intermediate short fibre lengths 6 are, as shown in Figure 2, formed with a metallic coating which has been etched away at the rear end 5 to reduce the diameter to that of the fibre 1 to which it is to be spliced. As has been described above, both ends of the fibre length 6 are suitably formed with optical surface before the etching process.

The enlarged forward end of fibre 6 is of suitably controlled length so the position of the forward face may be accurately determined by location of its rear end.

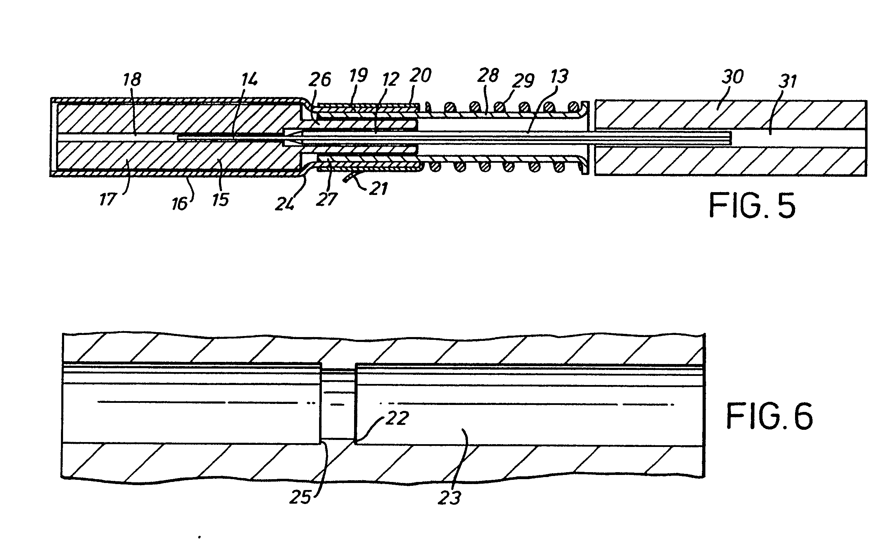

The splice assembly of Figure 3 comprises a cylindrical crimping ferrule 8 adapted to contain a deformable alignment member 9 formed from a deformable plastics extrusion 10, folded up to define an axial through passageway, and radially extending voids for accommodating circumferential deformation of the plastics. In use, as shown in Figure 4, the member 9 is contained within the ferrule and the end of a fibre length 1 inserted axially from one end to abut the end of the reduced portion 5 of a short coated fibre length 6 before reducing the ferrule 8 by crimping to secure the ends in the splice. During crimping axial forces are suitably applied to opposite ends of the alignment member 9, by use of a suitable tool, to resist longitudinal extrusion of the alignment member 9, and axial movement of the fibre ends apart.

The splice of Figure 3 and 4 and its method of assembly, is more fully disclosed in and forms the subject of our European patent application EP 81306159.5 publication number 0056196, published July 21.1982.

In Figure 5, a coated fibre length 12, formed generally as shown in Figure 2, with an enlarged diameter forward portion 13 and a reduced diameter tail 14, is positioned with the tail 14 extending into the through passageway of a crimp-splice assembly 15. The assembly 15 comprises an outer metal crimping ferrule 16 containing a deformable member 17 having a through passageway 18 for reception of the tail 14, at one end, and an optical fibre to be terminated, at the other, to be secured by crimping the ferrule 16.

The ferrule 16, at its forward end has an extension 19 slidably received within a latch collar 20 having a latch 21 for latching the assembly in the housing of Figure 6 by engagement with a shoulder 22 in the passage 23 thereof. The forward end 24 of the ferrule presenting a shoulder for engaging housing abutment 25.

A forward extension 26 of the deformable plastics member 17, of reduced diameter, supports the rear end of the enlarged diameter portion 13 of the fibre length 12, and presents an annular space 27 within the ferrule extension 19, which receives a rear end of a metal sleeve 28 carrying a biasing spring 29 acting against the forward end of the collar 20 and biasing the sleeve 28 and with it the fibre portion 13 forwards. The fibre portion 13 projects through the sleeve 28 and forwardly into one end of an alignment member 30 having a through passageway 31 within which the fibre portion 13 is a close fit. The fibre portion terminates approximately mid-way through the passageway 31 to leave a residual passageway portion for receipt of a projecting fibre portion of a complementary connector, not shown.

After the assembly of Figure 5 has been spliced to an optical fibre at the crimp-splice assembly 15, it is inserted into the housing passageway of Figure 6, from left to right, to register the ferrule shoulder 24 with the housing shoulder 25, to engage the latch 21 with the abutment 22. The alignment member is assembled from the right of Figure 6 to abut the forward end of the sleeve 28, and receive the forward portion of the coated fibre 13 within its passageway 31.

A complementary connector is generally similar, but the alignment member is omitted, and suitably also the biasing spring. Thus a coated fibre length projects forwardly from a mating face of the complementary connector and on mating engagement of the two connectors the complementary coated fibre penetrates the residual passageway portion 31 of the alignment member, to abut the end of the fibre portion 13. Suitably the alignment bushing displaces the sleeve 28 to the left against the bias of the spring 29 to ensure that the abuted fibre ends are biased together by the spring force.

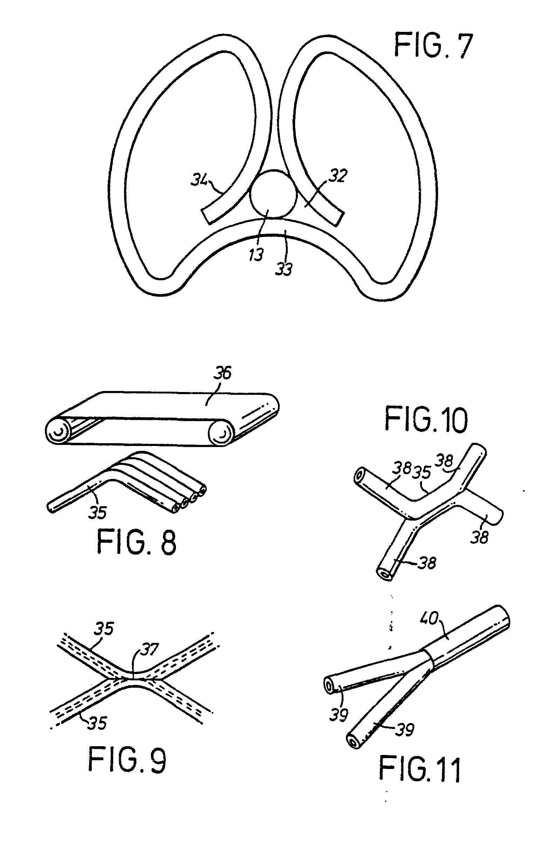

The alignment member 30 may be formed as shown in Figure 7 as a spring member folded form sheet metal to define an axial passageway 32 encompassed on three sides by an arcuate base 33 and a pair of arcuate spring arms 34, convex inwards to define the passageway 32 of generally triangular section for receiving the fibre portion 13 in a spring fit. Suitably, at opposite ends of the alignment member the base 33 and spring arms 34 are formed radially outwards of the passageway 32 to define flared entrance sections to facilitate axial insertion of the coated fibre ends.

In figure 8 is shown diagrammatically the formation of optical coupling members. Short, coated fibre lengths 35 are bent through an obtuse angle, and arranged in a group with the external sides at the bend faced up to a surface grinder 56 adapted to grind away the coating and form an optical face 37 at which the fibre core is exposed. A pair of such bent, coated fibre lengths 35 may then be faced up, as shown in Figure 9, with the optical faces 37 in register, and secured together by bonding the coatings. Suitably, as described above, the coatings are metallic and the bonding may be by welding or soldering, to form a 4-ended optical coupling device as shown in Figure 10. Ends 38 of the coated fibre lengths 35 of the device of Figure 10 may be connected to optical fibres by crimp splices as described above.

In an alternative arrangement as shown in Figure 11, a pair of short coated fibre lengths 39 are optically connected at an angle to a common coated fibre length 40 by similar techniques to define a 3-ended coupler or splitter device. Such a device may be used, for example, to couple a pair of optical fibres to an active device at a releasable connection. To this end the ends of the fibre lengths 39 may be crimp-spliced to the optical fibres, and the fibre length 40 mounted in a connector generally as described with reference to Figures 5 and 6.

The male optical fibre connector of Figure 12 comprises a short metal coated fibre length 41, corresponding to that shown in and described in connection with Figure 2, and for concise identification, hereinafter referred to as an optical needle. The optical needle 41 comprises a forward portion 42 of enlarged diameter compared to a rearward portion 43, the forward portion 42 being supported coaxially in and projecting forwardly from a support bushing 44, and the rearward portion 43 being spliced to axial alignment with the stripped forward end 45 of an optical fibre 46 extending from its cable covering 47.

The splice is formed generally as described with reference to Figures 3 and 4, but is further improved. The splice comprises an outer metal sleeve 48 containing in a middle portion an alignment member 49, generally of the form disclosed in Figure 3 and folded to define an axial through passageway 50 accommodating the rearward portion 43 of the optical needle 41 and the stripped forward end 45 of the optical fibre 46. The sleeve 48 extends forwardly and rearwardly, beyond the alignment member 49, and in its forward extension, accommodates the support bushing 44 coaxially with the alignment member, and at its rearward extension, accommodates a fibre support bushing 51 in similar manner. The support bushings 44 and 51 abut forward and rearward ends of the alignment member 49 and adjacent the abuting ends are formed with respective external annular grooves 52 and 53 of generally V-form.

The fibre support bushing 51 has a rearward extension 54 of reduced diameter, surrounding the optical fibre 46 with an enlarged bore 55 progressively reducing at a convergent portion 56 to a reduced diameter portion 57 adjacent the alignment member 49.

The through passageway 50 defined by the folded alignment member 49 has flared entry portions 58, 59 at opposite ends, to facilitate entry of the optical needle portion 43 and the fibre 45 and suitably defined by chamfers on the ends of the folded sections of the alignment member 49.

The splice assembly is preassembled with the optical needle 41, and the optical fibre 46 arranged to enter the forward end 45 into the alignment member 49 substantially to abut the rearward end of the needle portion 43. The sleeve 48 is then crimped about the alignment member 49 to effect precise axial alignment between the fibre end 45 and the needle portion 43. Simultaneously the sleeve portion surrounding the support bushings 44 and 51 are similarly crimped and indented into the grooves 52 and 53 at annular indentations. This serves to exert an axial constraint against ends of the alignment member 49 during the crimping process, and also thereafter to protect against the effects of creep of the material of the alignment member and undesirable relaxation of its alignment function.

In forming the splice it has been found that the alignment member 49 should be of material having a fine grain size in the micron range, because rough grain size materials buckle the fibre during crimping by micro-bending causing undesirable transmission losses. Eutectic tin-lead alloy and so-called super-plastic zinc have been found acceptable for grain size but suffer from creep in use, particularly with temperature cycling. A more satisfactory material is aluminium having a grain size of about 30 micron which does not suffer substantially from creep. A further material is super-plastic aluminium produced by the British Aluminium Company which has a grain size about 5 micron and is resistant to creep. Some rubbers form suitable materials and a rubber known as EPDM produced by the Dutch company DSM, is suitable, having excellent resistance to creep. The bushings 44 and 51 are suitably of malleable metal, e.g. brass, and during crimping are urged axially inwards to exert axial constraint on the central alignment member 49. The indentation 60 serves to maintain that constraint after crimping to resist creep relaxation of the member 49.

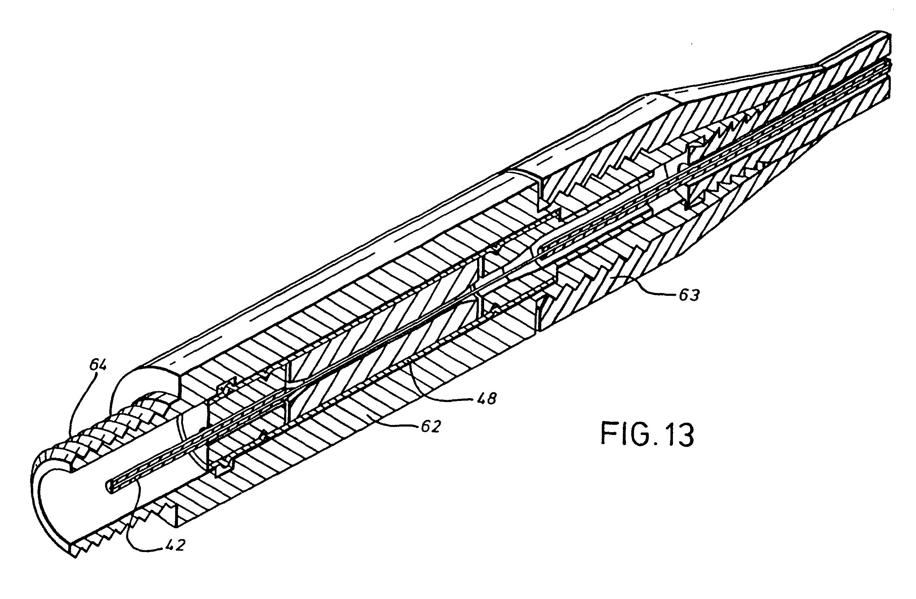

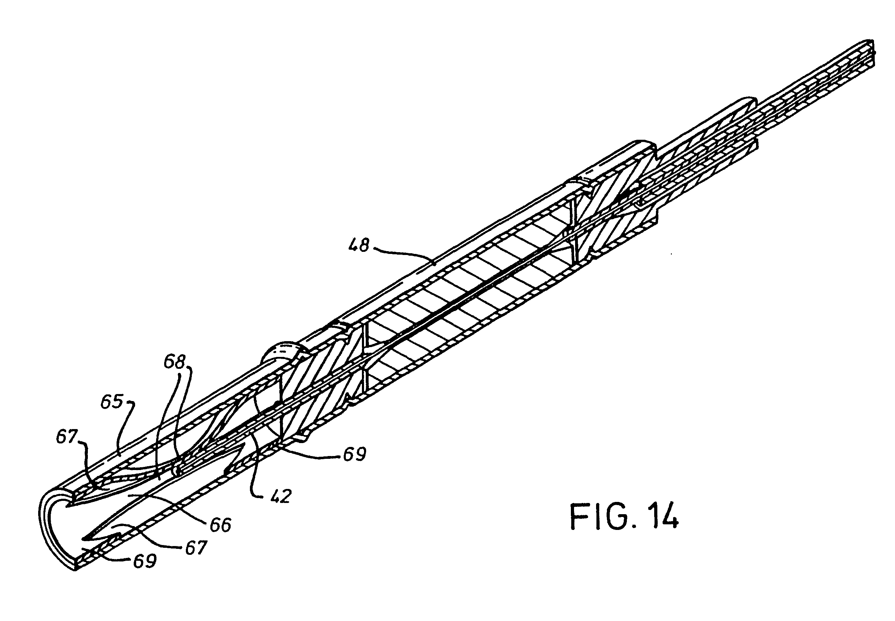

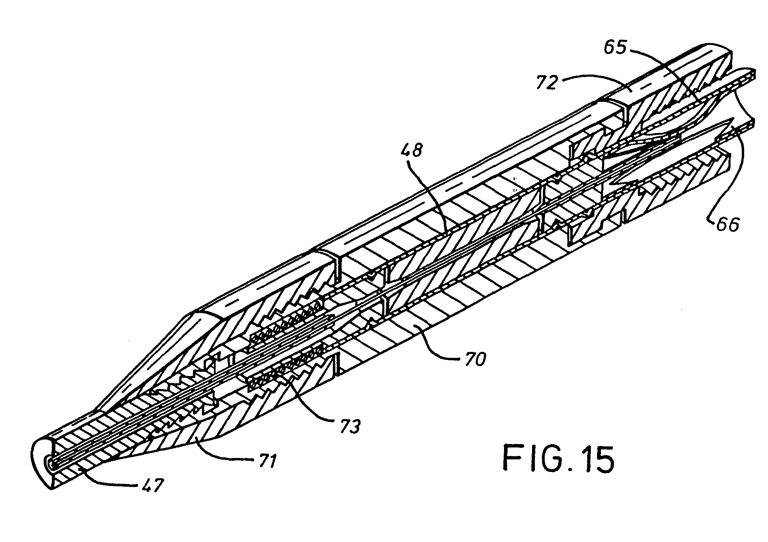

The male connector of Figure 12 is suitably mounted, as shown in Figure 13, in a cylindrical housing body 62, supporting the splice sleeve 48 and at its rearward end having a screw fitted cable clamp 63 for clamping the optical fibre cable 47 to the connector. At its forward end the housing body 62 has an externally threaded extension 64 formed with a bore surrounding the forwardly projecting needle part 42 and adapted to receive a complementary female connector to be described in connection with Figure 14 and 15.

The complementary female connector as shown in Figure 14 is similarly formed to the male connector described in connection with Figure 12, but the forward end of the sleeve 48 is extended at 65 forwardly beyond the needle support bushing 44 by substantially twice the length of the projecting needle portion 42. The sleeve extension 65 encases a resilient alignment member 66, defining a through passageway receiving the projecting needle portion 42. The alignment member 66 comprises a cylinder rolled up from a sheet metal blank, punched with apertures 67 to define three spring arms 68 extending between cylindrical end portion 69 of the member 66, the arms being bowed inwardly to define, at a centre section of the member a constricted passageway of lesser diameter than the fibre portion 42, when in a relaxed condition. The cylindrical end portions 69 fit closely within the sleeve extension 65, and the forward end of needle portion 42 is resiliently clamped between the arms 68, at a mid-point of the alignment member 65.

As an alternative to the metal alignment member 66, an alignment member of resilient elastomeric material may be formed in the manner of the alignment member 10 of the splice of Figure 3, presenting a through passageway of diameter less than the thickened portion 42 of the optical needle so that on insertion of the needle into the passageway, resilient deformation of the alignment member takes place.

As shown in Figure 15, the female connector is suitably mounted in housing body 70 surrounding the splice section of the sleeve 48, and having at its rearward end a screw fitted cable clamp 71 for the optical cable 47. At its forward end, surrounding the sleeve extension 65, the housing 70 is formed with a rotatable coupling sleeve 72, internally threaded and radially spaced from the sleeve extension 65 to receive the threaded forward end 64 of the male connector of Figure 14. A biasing spring 73 is mounted within the housing 70 to bias the sleeve 48 forwardly, and to accommodate rearward movement thereof when the male and female connectors are mated.

On mating of the connectors of Figures 13 and 15, the projecting needle portion 42 of the male connector is entered into the alignment member 66 to be resiliently gripped by the springs 68 and centered with the needle of the female connector. As the coupling sleeve 72 is tightened on to the threaded male connector portion 64, the forward needle portions 42 are drawn into abutment and the spring 73 slightly compressed.

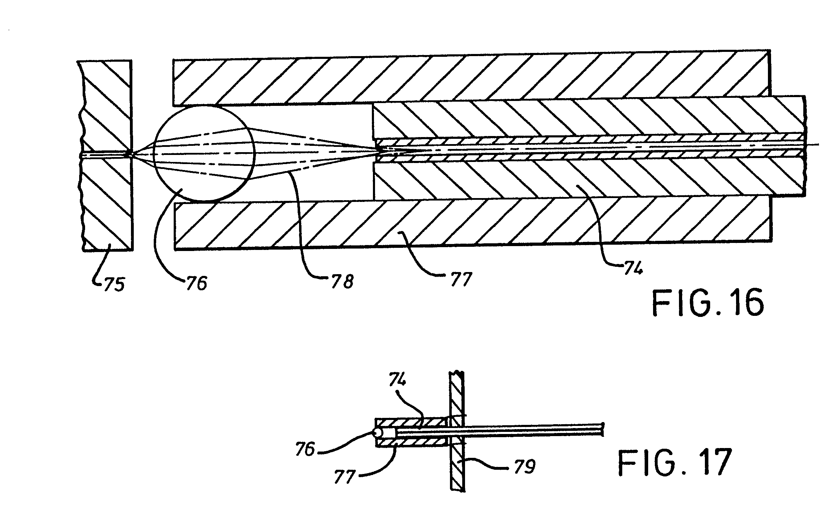

Figure 16 illustrates the coupling of an optical needle 74 to a laser 75 by means of a sapphire lens 76. The laser 75 is optically aligned with the axis of a metal tube 77 accurately bored to accept the optical needle 74 in a close fit, at one end, and at the other to accept the sapphire lens 76. The needle 74 is positioned axially of the tube 77 to collect the focussed laser beam as indicated by the light lines 78. Suitably, as shown in figure 17, the tube 77 is mounted at an aperture in the wall 79 of a container for the laser 75, and the needle 74 projects externally of the casing where it may be spliced to a fibre cable in the manner of the connector of Figures 11 and 12, or it may be received within the alignment member of a female connector corresponding to that of Figures 14 and 15.

**Claims**

1. A method of making an optical fibre terminal comprising an optical fibre length for terminating an optical fibre by splicing in optical alignment therewith, which comprises initially forming a short length of fibre (6) within a coating and thereafter providing the short fibre length (6) with an optical surface, characterised by forming a length of optical fibre with an initial thin electroless metallic coating of uniform thickness and a subsequent relatively thick electroplated coating of uniform thickness, cutting the short length (6) from the metallic coated fibre to form a short needle-like length (6) coated throughout the length and between the opposite ends thereof, and providing the opposite ends of the coated short length (6) with optical surfaces.

2. A method as claimed in claim 1, characterised in that after forming the optical surfaces, part of the coating is removed over an end portion of the length (6) to define a reduced diameter end portion (5) for splicing to the fibre (2) to be terminated.

3. A method as claimed in claim 2, characterised in that the coating is removed to reduce the diameter over the end portion (5) to match that of the fibre (2) to be terminated.

4. A method as claimed in claim 1, 2 or 3, characterised in that after forming the optical surfaces, the coated fibre length (6) is subjected to a further plating operation, at least at one end, to define an annular raised section around the optical face at that end to protect the optical face and defined by an extension of the coating beyond the optical surface.

5. An optical fibre terminal formed by the method as claimed in any of claims 1 to 4, and spliced at one end to and in optical alignment with an extended length of relatively flexible optical fibre, and at the other end projecting from the splice as a rigid optical needle.

6. An optical fibre terminal formed by the method as claimed in claims 1 to 4, characterised in that the short fibre length is of diameter in the range of 50 to 125 micron and the coated fibre or the enlarged diameter one end portion thereof has an outer diameter of the order of 500 micron concentric with the core to within 1 micron.

7. An optical fibre terminated by a short coated fibre length made by the method as claimed in any of claims 1 to 4, characterised in that the relatively rigid coated fibre length (41) and the fibre (45) to be terminated are aligned in a deformable alignment body (49) having an alignment passageway (50) in which the coated length (41) and the fibre (45) to be terminated are disposed end to end, the alignment body (49) being contained within a metal crimping sleeve (48) which is radially crimped resiliently to deform the alignment body (49) about the abutted ends of the coated length (41) and the length (45) to be terminated, the relatively rigid coated length (42) projecting from the alignment body (49).

8. A terminated optical fibre as claimed in claim 7, characterised in that the crimping sleeve (48) at opposite ends extends beyond the alignment body (49) around support bushings (44, 51), one at each end, the bushings (44, 51) having axial passageways for the coated fibre (41) and the terminated fibre (47), respectively, and that the crimping sleeve axially constrains opposite ends of the alignment body (49) under compression, indentations (60, 61) in the crimping sleeve (48) securing the support bushings (44, 51) against coming asunder, the coated fibre (42) projecting from the associated support bushing (44).

9. A terminated optical fibre as claimed in claim 7 or claim 8, characterised in that the coated fibre length (41) has a relatively thick coating over that portion (42) projecting from the alignment body (49) and a relatively thin coating over that portion (43) within the alignment body (49).

10. A terminated optical fibre as claimed in any of claims 7 to 9, characterised in that the crimping sleeve (16) is supported in a spring-loaded carrier (20, 28, 29) mounted in a connector housing, the spring-loaded means (29) being arranged to be compressed on engagement of the connector housing with a complementary housing to bias the coated fibre length (14) axially towards a complementary optical member in the complementary housing.

11. A fibre optic male connector comprising a terminated fibre as claimed in claim 8 or 9 characterised in that the coated fibre (42) projects from the associated support bushing (44) and the crimping sleeve (48) to form a male connector.

12. A fibre optic female connector comprising a terminated fibre as claimed in claim 8 or 9, characterised in that the crimping sleeve (48) at the end (65) of the coated fibre (42) extends beyond the support bushing and the coated optical fibre (42) which extend coaxially into the sleeve extension (65), a resilient alignment member (66) being mounted in the sleeve extension (65) and having an alignment passageway embracing the end of the coated fibre (42) within the sleeve extension (65) the alignment member (66) resiliently engaging the coated fibre (42) and having an alignment passageway portion extending away therefrom for reception of a complementary coated fibre.

13. An optical fibre terminal made by the method as claimed in any of claims 1 to 4, coupled to a lens (76) characterised in that the lens (76) is mounted in the bore of a tube (77) within which the optical fibre terminal (74) has a close sliding fit.

14. A method of joining two or more optical fibre terminals made by the method as claimed in any of claims 1 to 4, to form an optical splitter or coupler which includes forming at least two of the coated fibres (35, 39) with optical side faces extending lengthwise along the fibre and, abutting the lengthwise optical faces and bonding the metal coatings surrounding the faces to effect a joint.

**Patentansprüche**

1. Verfahren zum Herstellen eines optischen Faseranschlusses mit einem optischen Faserstück zum Anschließen einer optischen Faser durch Verspleißen in optischer Ausrichtung damit, wobei anfänglich ein kurzes Faserstück (6) mit einer Beschichtung geformt wird und danach das kurze Faserstück (6) mit einer optischen Oberfläche versehen wird, dadurch gekennzeichnet, daß ein optisches Faserstück mit einer anfänglich dünnen elektrofreien metallischen Beschichtung gleichförmiger Dicke versehen wird und danach mit einer verhältnismäßig dikken elektroplattierten Beschichtung gleichförmiger Dicke, daß das kurze Stück (6) von der metallisch beschichteten Faser abgeschnitten wird, um ein kurzes nadelartiges Stück (6) zu bilden, das über die Länge hinweg und zwischen seinen Enden beschichtet ist, und daß die entgegengesetzten Enden des beschichteten kurzen Stücks (6) mit optischen Oberflächen versehen werden.

2. Verfahren nach Anspruch 1, dadurch gekennzeichnet, daß nach dem Formen der optischen Oberflächen ein Teil der Beschichtung über einem Endabschnitt des Stückes (6) entfernt wird, um einen Abschnitt (5) verminderten Durchmessers zum Verspleißen mit der anzuschließenden Faser (2) zu begrenzen.

3. Verfahren nach Anspruch 2, dadurch gekennzeichnet, daß die Beschichtung entfernt wird, um den Durchmesser über dem Endabschnitt (5) zur Anpassung an denjenigen der anzuschließenden Faser (2) zu vermindern.

4. Verfahren nach Anspruch 1, 2 oder 3, dadurch gekennzeichnet, daß nach dem Formen der optischen Oberflächen das beschichtete Faserstück (6) einem weiteren Plattierungsvorgang an wenigstens einem Ende unterzogen wird, um einen ringförmig erhabenen Abschnitt um die optische Stirnfläche an diesem Ende herum zum Schützen der optischen Fläche zu begrenzen und definiert durch eine Verlängerung der Beschichtung über die optische Fläche hinaus.

5. Nach dem Verfahren nach einem der Ansprüche 1 bis 4 geformter optischer Faseranschluß, der an einem Ende in optischer Ausrichtung mit einem ausgedehnten Stück einer verhältnismäßig flexiblen optischen Faser verspleißt ist und an dem anderen Ende von dem Spleiß als starre optische Nadel wegragt.

6. Nach dem Verfahren nach den Ansprüchen 1 bis 4 geformter optischer Faseranschluß, dadurch gekennzeichnet, daß das kurze Faserstück einen Durchmesser im Bereich von 50 bis 125 µm aufweist und die beschichtete Faser oder der eine Endabschnitt vergrößerten Durchmessers einen Außendurchmesser in der Größenordnung von 500 µm besitzt und innerhalb von 1 µm mit dem Kern konzentrisch ist.

7. Optische Faser, die durch ein kurzes beschichtetes Faserstück angeschlossen ist, welches mit dem Verfahren nach einem der Ansprüche 1 bis 4 hergestellt ist, dadurch gekennzeichnet, daß das verhältnismäßig starre beschichtete Faserstück (41) und die anzuschließende Faser (45) in einem deformierbaren Ausrichtkörper (49) ausgerichtet sind, der einen Ausrichtdurchgang (50) besitzt, in welchem das beschichtete Stück (41) und die anzuschließende Faser (45) mit ihren Enden aneinander angeordnet sind, und daß der Ausrichtkörper (49) innerhalb einer metallischen Quetschhülse (48) aufgenommen ist, welche radial elastisch gequetscht ist, um den Ausrichtkörper (49) um die aneinanderstoßenden Enden des beschichteten Stücks (41) und des anzuschließenden Stücks (45) zu deformieren, wobei das verhältnismäßig starre beschichtete Stück (42) von dem Ausrichtkörper (49) wegragt.

8. Angeschlossene optische Faser nach Anspruch 7, dadurch gekennzeichnet, daß die Quetschhülse (48) an entgegengesetzten Enden sich über den Ausrichtkörper (49) um jeweils eine an jedem Ende angeordnete Stützhülse (44, 51) herumerstreckt, daß die Hülsen (44, 51) axiale Durchgänge für die beschichtete Faser (41) bzw. die angeschlossene Faser (47) aufweisen, und daß die Quetschhülse entgegengesetzte Enden des Ausrichtkörpers (49) unter Kompression axial zusammenhält, wobei Einkerbungen (60, 61) der Quetschhülse (48) die Stützhülsen gegen das Auseinandergehen festlegt und die beschichtete Faser (42) von der zugeordneten Stützhülse (44) wegragt.

9. Angeschlossene optische Faser nach Anspruch 7 oder 8, dadurch gekennzeichnet, daß das beschichtete Faserstück (41) eine verhältnismäßig dicke Beschichtung über demjenigen Teil (42) aufweist, der von dem Ausrichtkörper (49) wegragt, sowie eine verhältnismäßig dünne Beschichtung über demjenigen Teil (43) innerhalb des Ausrichtkörpers (49).

10. Angeschlossene optische Faser nach einem der Ansprüche 7 bis 9, dadurch gekennzeichnet, daß die Quetschhülse (16) auf einem federbelasteten Träger (20, 28, 29) abgestützt ist, der in einem Verbindergehäuse montiert ist, daß die federbelastete Einrichtung (29) derart ausgebildet ist, daß sie beim Eingriff des Verbindergehäuses mit einem komplementären Gehäuse zusammengedrückt wird, um das beschichtete Faserstück (14) axial zu einem komplementären optischen Element in dem komplementären Gehäuse hin vorzuspannen.

11. Faseroptischer eindringender Verbinder mit einer angeschlossenen Faser nach Anspruch 8 oder 9, dadurch gekennzeichnet, daß die beschichtete Faser (42) von der zugeordneten Stützhülse (44) und der Quetschhülse (48) wegragt, um einen eindringenden Verbinder zu bilden.

12. Faseroptischer aufnehmender Verbinder mit einer angeschlossenen Faser nach Anspruch 8 oder 9, dadurch gekennzeichnet, daß die Quetschhülse (48) an dem Ende (65) der beschichteten Faser (42) sich über die Stützhülse und die beschichtete optische Faser (42) hinauserstreckt, welche sich koaxial in die Hülsenverlängerung (65) erstrecken, daß ein elastisches Ausrichtelement (66) in der Hülsenverlängerung (65) montiert ist und einen Ausrichtdurchgang besitzt, der das Ende der beschichteten Faser (42) innerhalb der Hülsenverlängerung (65) umgreift, wobei das Ausrichtelement (66) elastisch mit der beschichteten Faser (42) im Eingriff steht und einen Ausrichtdurchgangsabschnitt besitzt, der sich zur Aufnahme einer komplementären beschichteten Faser davon wegerstreckt.

13. Optischer Faseranschluß hergestellt nach dem Verfahren nach einem der Ansprüche 1 bis 4, gekoppelt mit einer Linse (76), dadurch gekennzeichnet, daß die Linse (76) in der Bohrung eines Rohrs (77) montiert ist, innerhalb dessen der optische Faseranschluß (74) einen engen Gleitsitz aufweist.

14. Verfahren zur Verbindung von zwei oder mehreren optischen Faseranschlüssen, die nach dem Verfahren nach einem der Ansprüche 1 bis 4 hergestellt sind, um einen optischen Teiler oder Koppler zu bilden, wobei wenigstens zwei der beschichteten Fasern (35, 39) mit optischen Seitenflächen versehen werden, die sich in Längsrichtung entlang der Faser erstrecken, und Aneinanderlegen der längsweisen optischen Flächen und haftend Verbinden der die Flächen umgebenden Metallbeschichtungen zur Herbeiführung einer Verbindung.

## Revendications

1. Procédé de fabrication d'une terminaison de fibre optique comprenant une longueur de fibre optique pour la terminaison d'une fibre optique par raccordement en alignement optique avec elle, qui consiste à former initialement une courte longueur de fibre (6) à l'intérieur d'un revêtement et à réaliser ensuite une surface optique sur la courte longueur de fibre (6), caractérisé en ce qu'il consiste à former une longueur de fibre optique avec un revêtement métallique mince initial sans courant d'épaisseur uniforme et, ensuite, un revêtement électrodéposé relativement épais d'épaisseur uniforme, à couper la courte longueur (6) de la fibre revêtue de métal pour former une courte longueur (6) analogue à une aiguille revêtue sur toute sa longueur et entre ses extrémités opposées, et à former des surfaces optiques aux extrémités opposées de la courte longueur revêtue (6).

2. Procédé selon la revendication 1, caractérisé en ce que, après la formation des surfaces optiques, une partie du revêtement est enlevée sur un tronçon extrême de la longueur (6) pour définir un tronçon extrême de diamètre réduit (5) pour un raccordement sur la fibre (2) devant être terminée.

3. Procédé selon la revendication 2, caractérisé en ce que le revêtement est enlevé pour réduire le diamètre sur le tronçon extrême (5) afin qu'il corresponde à celui de la fibre (2) à terminer.

4. Procédé selon l'une des revendications 1, 2 ou 3, caractérisé en ce que, après la formation des surfaces optiques, la longueur de fibre revêtue (6) est soumise à une autre opération de dépôt, au moins à une extrémité, pour définir une section annulaire surélevée autour de la face optique à cette extrémité afin de protéger la face optique, et définie par un prolongement du revêtement au-delà de la surface optique.

5. Terminaison de fibre optique formée par le procédé selon l'une quelconque des revendications 1 à 4, et raccordée par une extrémité à, et en alignement optique avec, une longueur étendue de fibre optique relativement flexible, et faisant saillie, à l'autre extrémité, du raccord à la manière d'une aiguille optique rigide.

6. Terminaison de fibre optique formée par le procédé selon l'une quelconque des revendications 1 à 4, caractérisée en ce que la courte longueur de fibre est de diamètre dans la gamme de 50 à 125 micromètres et la fibre revêtue ou le premier tronçon extrême de diamètre agrandi de cette fibre présente un diamètre extérieur de l'ordre de 500 micromètres, concentrique, en deçà de 1 micromètre, à l'âme.

7. Fibre optique terminée par une courte longueur de fibre revêtue fabriquée par le procédé selon l'une quelconque des revendications 1 à 4, caractérisée en ce que la longueur de fibre revêtue relativement rigide (41) et la fibre (45) à terminer sont alignées dans un corps déformable (49) d'alignement présentant un passage (50) d'alignement dans lequel la longueur revêtue (41) et la fibre (45) à terminer sont disposées bout à bout, le corps (49) d'alignement étant logé à l'intérieur d'un manchon métallique (48) à sertir qui est serti radialement pour déformer élastiquement le corps d'alignement (49) autour des extrémités en butée de la longueur revêtue (41) et de la longueur (45) à terminer, la longueur revêtue relativement rigide (42) faisant saillie du corps (49) d'alignement.

8. Fibre optique terminée selon la revendication 7, caractérisée en ce que le manchon (48) à sertir dépasse, à ses extrémités opposées, au-delà du corps d'alignement (49) autour de douilles (44, 51) de support, une à chaque extrémité, les douilles (44, 51) ayant des passages axiaux pour la fibre revêtue (41) et la fibre terminée (47), respectivement, et en ce que le manchon à sertir retient axialement sous compression les extrémités opposées du corps d'alignement (49), des empreintes (60, 61) dans le manchon (48) à sertir empêchant les douilles (44, 51) de support de se disjoindre, la fibre revêtue (42) faisant saillie de la douille associée (44) de support.

9. Fibre optique terminée selon la revendication 7 ou la revendication 8, caractérisée en ce que la longueur de fibre revêtue (41) comporte un revêtement relativement épais sur un tronçon (42) faisant saillie du corps d'alignement (49) et un revêtement relativement mince sur un tronçon (43) se trouvant dans le corps d'alignement (49).

10. Fibre optique terminée selon l'une quelconque des revendications 7 à 9, caractérisée en ce que le manchon (16) à sertir est supporté dans un moyen de support (20, 28, 29) chargé par ressort, monté dans un boîtier de connecteur, le moyen (29) chargé par ressort étant agencé de façon à être comprimé à la suite d'un enclenchement du boîtier de connecteur avec un boîtier complémentaire pour rappeler axialement la longueur de fibre revêtue (14) vers un élément optique complémentaire se trouvant dans le boîtier complémentaire.

11. Connecteur mâle pour fibre optique comprenant une fibre terminée selon la revendication 8 ou 9, caractérisé en ce que la fibre revêtue (42) dépasse de la douille de support associée (44) et du manchon à sertir (48) pour former un connecteur mâle.

12. Connecteur femelle pour fibre optique comprenant une fibre terminée selon la revendication 8 ou 9, caractérisé en ce que le manchon (48) à sertir, à l'extrémité (65) de la fibre revêtue (42), s'étend au-delà de la douille de support et de la fibre optique revêtue (42) qui s'étendent coaxialement dans le prolongement (65) du manchon, un élément élastique (66) d'alignement étant monté dans le prolongement (65) du manchon et présentant un passage d'alignement entourant l'extrémité de la fibre revêtue (42) à l'intérieur du prolongement (65) du manchon, l'élément d'alignement (66) portant élastiquement contre la fibre revêtue (42) et ayant un tronçon de passage d'alignement qui s'étend à l'écart de celle-ci pour recevoir une fibre revêtue complémentaire.

13. Terminaison de fibre optique fabriquée par le procédé selon l'une quelconque des revendications 1 à 4, couplée à une lentille (76), caractérisée en ce que la lentille (76) est montée dans la lumière d'un tube (77) à l'intérieur duquel la terminaison de fibre optique (74) est ajustée à glissement serré.

14. Procédé pour joindre deux ou plus de deux terminaisons de fibres optiques par le procédé selon l'une quelconque des revendications 1 à 4, pour former un diviseur ou un coupleur optique, qui consiste à former sur au moins deux des fibres revêtues (35, 39) des faces latérales optiques s'étendant longitudinalement à la fibre, et à mettre en butée les faces optiques longitudinales et lier les revêtements métalliques entourant les faces pour réaliser un joint.

FIG.1

FIG.2

FIG.3

FIG.4

FIG. 5

FIG. 6

EP 0 096 511 B1

FIG. 7

FIG.10

FIG. 8

FIG.9

FIG.11

FIG.12

FIG.13

64

62

48

63

42

EP 0 096 511 B1

FIG. 14

6

FIG.15

EP 0 096 511 B1

FIG. 16

FIG. 17

EP 0 096 511 B1